(19) Europäisches Patentamt
European Patent Office
Office européen des brevets

(11) **EP 4 475 320 A1**

(12) **EUROPEAN PATENT APPLICATION**
published in accordance with Art. 153(4) EPC

(43) Date of publication:
**11.12.2024 Bulletin 2024/50**

(21) Application number: **23875072.3**

(22) Date of filing: **05.09.2023**

(51) International Patent Classification (IPC):
**H01M 50/451** (2021.01)   **H01M 50/446** (2021.01)
**H01M 50/489** (2021.01)   **H01M 50/403** (2021.01)
**H01M 50/411** (2021.01)   **H01M 50/443** (2021.01)

(52) Cooperative Patent Classification (CPC):
**H01M 50/403; H01M 50/411; H01M 50/443;**
**H01M 50/446; H01M 50/451; H01M 50/489;**
**Y02E 60/10**

(86) International application number:
**PCT/KR2023/013207**

(87) International publication number:
**WO 2024/076003 (11.04.2024 Gazette 2024/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **05.10.2022 KR 20220126886**

(71) Applicant: **LG Energy Solution, Ltd.**
**Seoul 07335 (KR)**

(72) Inventors:
• **KIM, Min Ji**
**Daejeon 34122 (KR)**
• **KA, Kyung Ryun**
**Daejeon 34122 (KR)**
• **LEE, Seung Hyun**
**Daejeon 34122 (KR)**
• **HWANG, Seon Woo**
**Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR ELECTROCHEMICAL ELEMENT, METHOD FOR MANUFACTURING SAME, AND ELECTROCHEMICAL ELEMENT CONTAINING SAME**

(57) The present disclosure relates to a separator for an electrochemical device, a manufacturing method thereof, and an electrochemical device including the same, and specifically to a separator for an electrochemical device, which improves the cohesive force between the polymer binders and can prevent the coating layer from detaching from a polymer substrate by forming a coating layer with a polymer binder mixture containing a plurality of polymer binders having different glass transition temperatures, a manufacturing method thereof, and an electrochemical device including the same.

FIG. 1

**Description**

Field

The present disclosure claims the benefits of the filing date of Korean Patent Application No. 10-2022-0126886 filed with the Korean Intellectual Property Office on October 5, 2022, and the entire contents thereof are included in the present disclosure.

The present disclosure relates to a separator for an electrochemical device, a manufacturing method thereof, and an electrochemical device including the same, and specifically to a separator for an electrochemical device, which improves the cohesive force between the polymer binders and can prevent the coating layer from detaching from a polymer substrate by forming a coating layer with a polymer binder mixture containing a plurality of polymer binders having different glass transition temperatures, a manufacturing method thereof, and an electrochemical device including the same.

Related Art

A separator among components of an electrochemical device contains a polymer substrate having a porous structure located between a cathode and an anode, and serves to isolate the cathode and the anode, prevent electrical short circuit between the two electrodes, and pass an electrolyte and ions. The separator itself does not participate in the electrochemical reaction, but physical properties such as wettability to an electrolyte solution, degree of porosity, and thermal contraction rate affect the performance and safety of the electrochemical device.

Accordingly, in order to strengthen the physical properties of the separator, various methods for changing the physical properties of the coating layer by adding a coating layer to the porous polymer substrate and adding various materials to the coating layer have been attempted. For example, an inorganic material may be added to the coating layer in order to improve the mechanical strength of the separator, or an inorganic material or hydrate for improving the flame retardancy and heat resistance of the polymer substrate may be added to the coating layer.

The separator may be bonded to the electrode through a lamination process, and in order to ensure adhesive force between the electrode and the separator, polymer binders may be added to a composition for forming the coating layer of the separator.

Meanwhile, the porous polymer substrate has a problem in that shrinkage occurs when exposed to high temperatures, and due to this, when the separator shrinks within a lithium-ion battery, the cathode and the anode come into contact, causing an internal short circuit so that there is a problem in that thermal runaway occurs due to a decomposition reaction between the electrolyte solution and the active material.

Furthermore, although technology of suppressing heat shrinkage with the binding force between the polymer substrate and an inorganic material coating layer by coating the surface of the polymer substrate with an inorganic material has conventionally been actively researched, the electrolyte in the battery actually reduced the binding force between the polymer and the inorganic material, and the binding force was decreased at high temperatures so that there has been a problem in that shrinkage occurred since high temperature thermal stability was not secured.

Therefore, there was a need for research into technologies that could minimize the decrease in the binding force of the coating layer included in the separator.

**SUMMARY**

**Technical Problem**

A technical problem to be achieved by the present disclosure is to provide a separator for an electrochemical device, which improves the cohesive force between inorganic particles and the polymer binders and can prevent the coating layer from detaching due to impact during the process of cutting and handling the separator and assembling the battery, a manufacturing method thereof, and an electrochemical device including the same.

However, the problem to be solved by the present disclosure is not limited to the problem mentioned above, and other problems not mentioned will be clearly understood by those skilled in the art from the following description.

**Technical Solution**

One embodiment of the present disclosure provides a separator for an electrochemical device, including: a polymer substrate containing a plurality of pores; and a coating layer which is provided on at least one surface of the polymer substrate, contains a plurality of pores, and includes inorganic particles and a polymer binder mixture, wherein the polymer binder mixture contains three or more polymer binders having different glass transition temperatures.

According to one embodiment of the present disclosure, the polymer binder mixture contains a first polymer binder, a second polymer binder, and a third polymer binder, and the first polymer binder, the second polymer binder, and the third polymer binder may satisfy Mathematical Equation 1 below.

[Mathematical Equation 1]

Glass transition temperature of the first polymer binder < Glass transition temperature of the second polymer binder < Glass transition temperature of the third polymer binder.

According to one embodiment of the present disclosure, the first polymer binder may have a glass transition temperature of -40°C or higher to -20°C or lower.

According to one embodiment of the present disclosure, the second polymer binder may have a glass transition temperature of 0°C or higher to 20°C or lower.

According to one embodiment of the present disclosure, the third polymer binder may have a glass transition temperature of 30°C or higher to 60°C or lower.

According to one embodiment of the present disclosure, the first polymer binder may have a glass transition temperature of -40°C or higher to -20°C or lower, the second polymer binder may have a glass transition temperature of 0°C or higher to 20°C or lower, and the third polymer binder may have a glass transition temperature of 30°C or higher to 60°C or lower.

According to one embodiment of the present disclosure, the first polymer binder may be contained in an amount of 5 parts by weight or more to 15 parts by weight or less based on 100 parts by weight of the polymer binder mixture, the second polymer binder may be contained in an amount of 30 parts by weight or more to 50 parts by weight or less based on 100 parts by weight of the polymer binder mixture, and the third polymer binder may be contained in an amount of 40 parts by weight or more to 60 parts by weight or less based on 100 parts by weight of the polymer binder mixture.

According to one embodiment of the present disclosure, the amount of the first polymer binder contained in one portion to which the polymer substrate of the thickness of the coating layer is adjacent may be greater than that of the first polymer binder contained in the other portion to which the polymer substrate thereof is not adjacent.

According to one embodiment of the present disclosure, the amount of the third polymer binder contained in the other portion to which the polymer substrate of the thickness of the coating layer is not adjacent may be greater than that of the third polymer binder contained in one portion to which the polymer substrate thereof is adjacent.

According to one embodiment of the present disclosure, the second polymer binder may be contained in a uniform amount in the coating layer.

One embodiment of the present disclosure is a method for manufacturing the separator for an electrochemical device, and provides a method for manufacturing a separator for an electrochemical device, the method including steps of: coating at least one surface of the polymer substrate with a composition for forming a coating layer, which includes the polymer binder mixture containing three or more polymer binders having different glass transition temperatures and the inorganic particles; and drying the coated composition for forming a coating layer to form the coating layer.

According to one embodiment of the present disclosure, the drying temperature may be 30°C or higher to 70°C or lower.

One embodiment of the present disclosure provides an electrochemical device including a cathode, an anode, and a separator interposed between the cathode and the anode, wherein the separator is the separator for an electrochemical device.

## ADVANTAGEOUS EFFECTS

The separator for an electrochemical device according to one embodiment of the present disclosure can improve the adhesive force between the polymer substrate and the coating layer by improving the cohesive force between the inorganic particles and the polymer binders.

The method for manufacturing a separator for an electrochemical device according to one embodiment of the present disclosure can improve the cohesive force between the inorganic particles and the polymer binders by controlling the temperature of the drying process, and can improve the adhesive force between the polymer substrate and the coating layer and the adhesive force between the electrode and the coating layer respectively by adjusting the contents of the first polymer binder and the third polymer binder depending on the position of the coating layer.

The electrochemical device according to one embodiment of the present disclosure can prevent the coating layer from detaching due to impact during the process of cutting and handling the separator and the process of assembling the battery.

The effect of the present disclosure is not limited to the above-mentioned effects, and effects not mentioned will be clearly understood by those skilled in the art from the present specification and the accompanying drawings.

## BRIEF DESCRIPTION OF THE DRAWINGS

FIG. 1 is a schematic diagram of a separator for an electrochemical device according to one embodiment of the present disclosure.
FIG. 2 is a flowchart of a method for manufacturing an electrochemical device separator according to one embodiment of the present disclosure.

[Explanation of reference numerals]

100: Separator for electrochemical device
110: Polymer substrate
130: Coating layer
131: One portion of coating layer
133: Other portion of coating layer
S 10: Step of preparing composition for forming coating layer
S 30: Coating step
S 50: Drying step

## DESCRIPTION OF EXEMPLARY EMBODIMENTS

Embodiments of the present disclosure to be described below are provided to explain the present disclosure more clearly to those skilled in the art, the scope of the present disclosure is not limited by the embodiments below, and the embodiments below may be modified in several different forms.

The terms used in the present specification are used to describe specific embodiments and are not intended to limit the present disclosure. Terms in singular forms used in the present specification may include those in plural forms unless the context clearly indicates otherwise.

The terms "comprise" and/or "comprising" used in the present specification specify the presence of a stated shape, step, number, operation, member, element and/or group thereof, and do not exclude the presence or addition of one or more other shapes, steps, numbers, operations, members, elements and/or groups thereof.

The term "connection" used in the present specification is a concept which not only means that any of the members are directly connected, but also includes that other members are further interposed between the members and indirectly connected.

In the present specification, when any member is said to be located "on" other members, this includes not only the case where any member is in contact with other members, but also the case where another member exists between the two members.

The term "and/or" used in the present specification includes any one and all combinations of one or more of the concerned listed items.

Terms of degrees such as "about" and "substantially" used in the present specification are used to mean a range of numerical values or degrees or a meaning close thereto, taking into account inherent manufacturing and material tolerances, and are used to prevent infringers from unfairly exploiting the disclosed contents that mention precise or absolute numerical values provided to aid understanding of the present disclosure.

In the present specification, the characteristic of "having pores" refers to the fact that an object contains a plurality of pores so that gaseous and/or liquid fluid can pass to one side surface of the object and to the other side surface thereof by a structure in which the pores are connected to each other.

In the present specification, the separator has porous characteristics including a large number of pores, and serves as a porous ion-conducting barrier that allows ions to pass while blocking electrical contact between the anode and the cathode in an electrochemical device.

Hereinafter, the present disclosure will be described in more detail.

One embodiment of the present disclosure provides a separator for an electrochemical device, including: a polymer substrate containing a plurality of pores; and a coating layer which is provided on at least one surface of the polymer substrate, contains a plurality of pores, and includes inorganic particles and a polymer binder mixture, wherein the polymer binder mixture contains three or more polymer binders having different glass transition temperatures.

The separator for an electrochemical device according to one embodiment of the present disclosure can improve the adhesive force between the polymer substrate and the coating layer by improving the cohesive force between the inorganic particles and the polymer binders.

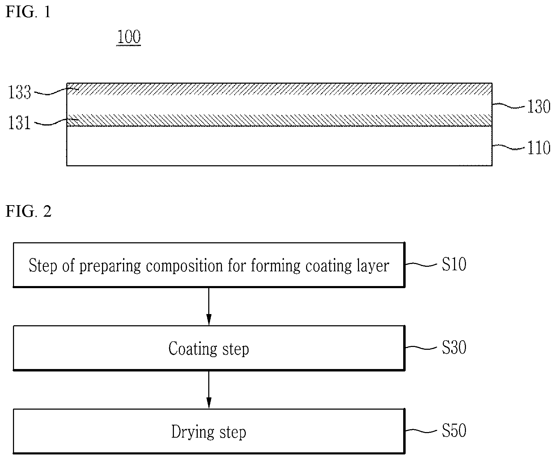

FIG. 1 is a schematic diagram of a separator 100 for an electrochemical device according to one embodiment of the present disclosure. With reference to FIG. 1, the separator 100 for an electrochemical device, which is one embodiment of the present disclosure, will be described in detail.

According to one embodiment of the present disclosure, it includes a polymer substrate 110 containing a plurality of pores. In the present specification, the polymer substrate containing a plurality of pores may refer to a porous polymer substrate, and may refer to a porous membrane whose pores have a fine diameter. As described above, the separator for an electrochemical device can enable lithium ions to pass through while preventing short circuit by including a polymer substrate 110 containing a plurality of pores and thus electrically insulating the anode and cathode, and can prevent thermal runaway of the battery by shutting down the pores since the polymer substrate melts in the case of high temperature runaway during battery use. Furthermore, the polymer substrate serves as a porous ion-conducting barrier that allows ions to pass while blocking electrical contact between the anode and the cathode. A plurality of pores are formed inside the polymer substrate, and the pores have a structure in which they are interconnected so that it is preferable that gas or liquid can pass to one side surface of the separator and to the other side surface thereof.

According to one embodiment of the present disclosure, a substrate having high resistance to an electrolyte solution, which is an organic solvent, can be used as the polymer substrate 110, and the polymer substrate 110 can be used without particular restrictions as long as it can be used as a separator material for secondary batteries. Specifically, it may include resins such as polyolefin-based resins including polyethylene, polypropylene, and polybutene, polyvinyl chloride, polyethylene terephthalate, polycycloolefin, polyether sulfone, polyamide, polyimide, polyamideimide, polyaramid, nylon, polytetrafluoroethylene, mixtures thereof, or copolymers thereof. Preferably, polyolefin-based resins may be used, and more preferably, polyethylene resins may be used. Polyolefin-based resins among these have excellent applicability of a mixture for forming a coating layer, and can increase the capacity per volume by increasing the ratio of an electrode active material layer within the battery by thinning the thickness of the separator for secondary batteries.

According to one embodiment of the present disclosure, the polymer substrate 110 may have a thickness of 1 $\mu$m or more to 100 $\mu$m or less. Specifically, the polymer substrate may have a thickness of 10 $\mu$m or more to 95 $\mu$m or less, 15 $\mu$m or more to 90 $\mu$m or less, 20 $\mu$m or more to 85 $\mu$m or less, 25 $\mu$m or more to 80 $\mu$m or less, 30 $\mu$m or more to 75 $\mu$m or less, 35 $\mu$m or more to 70 $\mu$m or less, 40 $\mu$m or more to 65 $\mu$m or less, 45 $\mu$m or more to 60 $\mu$m or less, 50 $\mu$m or more to 65 $\mu$m or less, or 55 $\mu$m or more to 60 $\mu$m or less. Preferably, the polymer substrate may have a thickness of 1 $\mu$m or more to 30 $\mu$m or less. The volume of the electrochemical device can be minimized, and the anode and cathode can be electrically insulated by adjusting the thickness of the polymer substrate in the above-described range.

According to one embodiment of the present disclosure, the pores contained in the polymer substrate may have a size of 1 nm or more to 100 nm or less. Specifically, the pores contained in the polymer substrate may have a size of 5 nm or more to 95 nm or less, 10 nm or more to 90 nm or less, 15 nm or more to 85 nm or less, 20 nm or more to 80 nm or less, 25 nm or more to 75 nm or less, 30 nm or more to 70 nm or less, 35 nm or more to 65 nm or less, 40 nm or more to 60 nm or less, or 45 nm or more to 55 nm or less. Preferably, the pores contained in the polymer substrate may have a size of 20 nm or more to 60 nm or less. The permeability of lithium ions can be adjusted by adjusting the size of the pores contained in the polymer substrate in the above-described range.

In one embodiment of the present disclosure, the pore size of the polymer substrate 110 and/or the coating layer 130 may be measured using the BET 6-point method by the nitrogen gas adsorption distribution technique using a scanning electron microscope (SEM) image, a mercury porosimeter, a capillary flow porometer, or a porosimetry analyzer (Bell Japan Inc, Belsorp-II mini). At this time, it may be advantageous to use a capillary flow porometer.

According to one embodiment of the present disclosure, the polymer substrate may have a porous sheet form having a plurality of pores. The pores include open pores, and since the open pores are formed in a structure in which they are interconnected to each other, gas or liquid can pass to one side surface of the polymer substrate and to the other side surface thereof.

According to one embodiment of the present disclosure, it is preferable that the polymer substrate has an air permeability of 2,000 sec/100 ml or less and a porosity of 30 vol% to 60 vol% in terms of battery output and cycle characteristics.

In the present specification, the air permeability (sec/100 ml) refers to the time (seconds) it takes for 100 ml of air to pass through a sample such as a polymer substrate or separator of 1 square inch in size under constant air pressure. In the present specification, the air permeability may be measured according to standard regulations in the present technical field. Specifically, the air permeability may be measured using a known Gurley Densometer in accordance with ASTM D 726-58 or ASTM D726-94, and for example, it may be the time in second units for 100 ml of air to pass through 1 square inch (or 6.54 cm$^2$) of a sample under the pressure of air of 0.304 (kPa) or the pressure of water of 1.215 kN/m$^2$. According to another embodiment, the air permeability may be expressed in terms of time (seconds) by measuring the time it takes for 100 ml of air to pass through a 1 square inch sample under a constant pressure of 4.8 inch of H$_2$O at room temperature according to the Gurley measurement method of the Japanese industrial standard (JIS-P8117). In one embodiment of the present disclosure, the air permeability can be measured using, for example, Asahi seico's EG01-55-1MR equipment according to the standard regulations.

In the present specification, the porosity refers to the ratio of the volume occupied by pores to the total volume, and vol% is used as a unit thereof, and can be used interchangeably with terms such as porosity rate and porosity. In the present disclosure, the measurement of the porosity is not particularly limited, and methods known in the present technical field may be applied. For example, it may be measured by the Brunauer-Emmett-Teller (BET) measurement method using nitrogen gas, the water intrusion porosimeter method, the capillary flow porometer, or the Hg porosimeter. Alternatively, in one embodiment of the present disclosure, the true density of the polymer substrate may be calculated from the density (apparent density) of the obtained polymer substrate, the composition ratio of the materials included in the polymer substrate, and the density of each component, and the porosity of the polymer substrate may be calculated from the difference between the apparent density and the net density. Specifically, the porosity may be calculated by [Mathematical Equation 2] below.

[Mathematical Equation 2]

$$\text{Porosity (vol\%)} = \{1 - (\text{apparent density/true density})\} \times 100$$

Meanwhile, the apparent density in the above equation may be calculated from [Mathematical Equation 3] below.

Apparent density (g/cm$^3$) = {Weight of polymer substrate [g]/(Thickness of polymer substrate [cm] $\times$ Area of polymer substrate [cm$^2$])}　　[Mathematical Equation 3]

According to one embodiment of the present disclosure, it includes a coating layer 130 which is provided on at least one surface of the polymer substrate 110, contains a plurality of pores, and includes inorganic particles and a polymer binder mixture. It can prevent the polymer substrate 110 from being shrunk at high temperatures and can prevent an internal short circuit from occurring when the anode and cathode within the battery come into contact by including a coating layer 130 which is provided on at least one surface of the polymer substrate 110, contains a plurality of pores, and includes inorganic particles and a polymer binder mixture as described above.

According to one embodiment of the present disclosure, the coating layer 130 may have a thickness of 0.1 μm or more to 20 μm or less. Specifically, the coating layer may have a thickness of 1 μm or more to 19 μm or less, 2 μm or more to 18 μm or less, 3 μm or more to 17 μm or less, 4 μm or more to 16 μm or less, 5 μm or more to 15 μm or less, 6 μm or more to 14 μm or less, 7 μm or more to 12 μm or less, 8 μm or more to 11 μm or less, or 9 μm or more to 10 μm or less. It is possible to control the thickness of the separator for an electrochemical device and implement weight reduction at the same time, and prevent shrinkage of the polymer substrate at high temperatures by adjusting the thickness of the coating layer in the above-described range.

In one embodiment of the present disclosure, the thickness of the polymer substrate and/or the coating layer can be measured by applying a contact thickness gauge. The contact-type thickness gauge may be used as, for example, VL-50S-B from Mitutoyo.

According to one embodiment of the present disclosure, the coating layer 130 is provided on at least one surface of the polymer substrate 110. Specifically, the coating layer 130 is provided on one surface of the polymer substrate 110 or on both surfaces of the polymer substrate 110. As described above, the coating layer 130 is provided on at least one surface of the polymer substrate 110, and thus shrinkage of the polymer substrate 110 at high temperatures can be minimized.

According to one embodiment of the present disclosure, the coating layer may be formed using a composition for forming a coating layer, which includes the inorganic particles and the polymer binder mixture. As described above, a composition for forming a coating layer, which includes the inorganic particles and the polymer binder mixture, is used, and thus the convenience of working to form a coating layer can be improved, and the viscosity of the composition for forming a coating layer can be easily adjusted.

According to one embodiment of the present disclosure, the composition for forming a coating layer may further include a solvent. As described above, the composition for forming a coating layer further includes a solvent, and thus the convenience of working to form a coating layer can be improved, and the inorganic particles and the polymer binder mixture can be in uniformly dispersed in the composition for forming a coating layer. In the present specification, the solvent may refer to a dispersion medium, and an emulsion in which the inorganic particles and the polymer binder mixture are dispersed by the solvent may refer to the composition for forming a coating layer.

According to one embodiment of the present disclosure, the solvent may be one selected from the group consisting of water, acetone, ethanol, isopropyl alcohol (IPA), dimethylacetamide (DMAc), dimethylformamide (DMF), N-methyl-2-pyrrolidone (NMP), acetonitrile, and combinations thereof. Specifically, it is preferable that the solvent is water. The viscosity of the composition for forming a coating layer can be adjusted and the dispersibility of the inorganic particles and the polymer binders within the solvent can be improved by selecting the solvent from those described above.

According to one embodiment of the present disclosure, the composition for forming a coating layer may further include an additive. As described above, a composition for forming a coating layer further includes an additive, and thus the binding force of the inorganic particles can be improved and the dispersibility of the composition for forming a coating layer can be improved.

According to one embodiment of the present disclosure, the additive may include a dispersant, a surfactant, an antifoaming agent, a flame retardant, an adhesion enhancer, etc. The additive is selected from those described above, and thus the dispersibility and phase stability of the composition for forming a coating layer can be improved, air bubbles can be removed or flame retardancy can be added, adhesive force can be improved, and the wettability of the polymer substrate with the composition for forming a coating layer can be improved.

According to one embodiment of the present disclosure, the dispersant may include one or more selected from polyacrylic acid, oil-soluble polyamine, oil-soluble amine compound, fatty acids, fatty alcohols, sorbitan fatty acid ester, tannic acid, and pyrogallic acid. Preferably, the dispersant may be polyacrylic acid (PAA). The dispersant is selected from those described above, and thus the dispersibility and phase stability of the composition for forming a coating layer can be improved.

According to one embodiment of the present disclosure, the dispersant may be contained in an amount of 0 parts by weight or more to 5 parts by weight or less based on 100 parts by weight of the composition for forming a coating layer. Specifically, the dispersant may be contained in an amount of more than 0 parts by weight to 5 parts by weight or less, 1 part by weight or more to 4 parts by weight or less, or 2 parts by weight or more to 3 parts by weight or less based on 100 parts by weight of the composition for forming a coating layer. The dispersibility and phase stability of the composition for forming a coating layer can be improved by adjusting the content of the dispersant in the above-described range.

According to one embodiment of the present disclosure, the coating layer 130 contains a plurality of pores. Specifically, the coating layer 130 contains a plurality of micropores. The plurality of pores are filled in a state in which the polymer binders and inorganic particles contained in the polymer binder mixture are densely filled in the coating layer, and may be a plurality of fine pores resulting from interstitial volumes formed between the inorganic particles. These micropores are formed in a structure in which they are connected to each other, and show a porous structure that enables gas or liquid to pass from one side surface to the other side surface. As described above, the coating layer 130 contains a plurality of pores, and thus the electrolyte solution within the battery, which will be described later, is allowed to penetrate the separator.

According to one embodiment of the present disclosure, the coating layer 130 includes a coating layer containing inorganic particles and a polymer binder mixture. Specifically, the coating layer 130 may be formed by coating a composition for forming a coating layer, which includes inorganic particles and a polymer binder mixture, on the polymer substrate, and evaporating the solvent included in the composition for forming a coating layer, thereby densely filling the inorganic particles and the polymer binders contained in the polymer binder mixture to form the coating layer. As described above, the coating layer 130 includes a coating layer containing inorganic particles and a polymer binder mixture, and thus the electrolyte solution may be allowed to permeate the separator and heat shrinkage of the separator may be prevented at high temperatures.

According to one embodiment of the present disclosure, the inorganic particles may be contained in an amount of 80 parts by weight or more to 95 parts by weight or less based on 100 parts by weight of composition for forming a coating layer. Specifically, the inorganic particles may be contained in an amount of 81 parts by weight or more to 94 parts by weight or less, 82 parts by weight or more to 93 parts by weight or less, 83 parts by weight or more to 92 parts by weight or less, 84 parts by weight or more to 91 parts by weight or less, 85 parts by weight or more to 90 parts by weight or less, 86 parts by weight or more to 89 parts by weight or less, or 87 parts by weight or more to 88 parts by weight or less based on 100 parts by weight of the composition for forming a coating layer. The content of the inorganic particles is adjusted in the above-described range, and thus a phenomenon of shrinking the separator at high temperatures can be prevented by improving the insulation properties and heat resistance of the separator.

According to one embodiment of the present disclosure, the inorganic particles are not particularly limited as long as they are electrochemically stable. That is, the inorganic particles that can be used in the present disclosure are not particularly limited as long as oxidation and/or reduction reactions do not occur in the operating voltage range (e.g., 0 to 5 V based on $Li/Li^+$) of an electrochemical device applied. In particular, when inorganic particles with a high dielectric constant are used as the inorganic particles, the ionic conductivity of the electrolyte solution can be improved by contributing to an increase in the degree of dissociation of electrolyte salts, for example lithium salts, in the liquid electrolyte. For the above-described reasons, the inorganic particles preferably include high dielectric constant inorganic particles having a dielectric constant of 5 or more, preferably 10 or more. Non-limiting examples of the inorganic particles with a dielectric constant of 5 or more include $BaTiO_3$, $Pb(Zr,Ti)O_3$ (PZT), $b_{1-x}La_xZr_{1-y}Ti_yO_3$ (PLZT, $0<x<1$, $0<y<1$), $Pb(Mg_{1/3}Nb_{2/3})O_3$-$PbTiO_3$ (PMN-PT), hafnia ($HfO_2$), $SrTiO_3$, $SnO_2$, $CeO_2$, $MgO$, $NiO$, $CaO$, $ZnO$, $ZrO_2$, $SiO_2$, $Y_2O_3$, $Al_2O_3$, $Al(OH)_3$, SiC, AlOOH and $TiO_2$, or mixtures thereof.

In addition, inorganic particles having the ability to transfer lithium ions, that is, inorganic particles that contain lithium element, do not store lithium, and have the function of moving lithium ions may be used as the inorganic particles. Non-limiting examples of the inorganic particles having the ability to transfer lithium ions include $(LiAlTiP)_xO_y$ series glasses ($0 < x < 4$, $0 < y < 13$) such as lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $14Li_2O\text{-}9Al_2O_3\text{-}38TiO_2\text{-}39P_2O_5$, etc., lithium germanium thiophosphate ($Li_xGe_yP_zS_w$, $0 < x < 4$, $0 < y < 1$, $0 < z < 1$, $0 < w < 5$) such as lithium lanthanum titanate ($Li_xLa_yTiO_3$, $0 < x < 2$, $0 < y < 3$), $Li_{3.25}Ge_{0.25}P_{0.75}S_4$, etc., lithium nitride ($Li_xN_y$, $0 < x < 4$, $0 < y < 2$) such as $Li_3N$, etc., $SiS_2$ series glasses ($Li_xSi_yS_z$, $0 < x < 3$, $0 < y < 2$, $0 < z < 4$) such as $Li_3PO_4\text{-}Li_2S\text{-}SiS_2$, etc., $P_2S_5$ series glasses ($Li_xP_yS_z$, $0 < x < 3$, $0 < y < 3$, $0 < z < 7$) such as $LiI\text{-}Li_2S\text{-}P_2S_5$, etc., or mixtures thereof.

According to one embodiment of the present disclosure, the inorganic particles may have an average particle diameter $D_{50}$ of 50 nm or more to 5,000 nm or less. Specifically, the inorganic particles may have an average particle diameter $D_{50}$ of 100 nm or more to 4,500 nm or less, 200 nm or more to 4,000 nm or less, 300 nm or more to 3,000 nm or less, 400 nm or more to 2,000 nm or less, or 500 nm or more to 1,000 nm or less. If the average particle diameter of the inorganic particles is less than 50 nm, since polymer binders for bonding between the inorganic particles are additionally required as the specific surface area increases, it is disadvantageous in terms of electrical resistance. Additionally, the greater the amounts of the polymer binders present, the lower the peeling strength or polymer binder peeling may be. If the average particle diameter of the inorganic particles exceeds 5,000 nm, the uniformity of the surface of the coating layer decreases. Additionally, if the size of the protruding particles after coating is large, the separator and electrode may be damaged during lamination, resulting in a short circuit.

According to one embodiment of the present disclosure, the inorganic particles may have an aspect ratio of 1 or more to 2 or less. Specifically, the inorganic particles may have an aspect ratio of 1.2 or more to 1.8 or less, 1.3 or more to 1.7 or less, or 1.4 or more to 1.6 or less. The polymer binders move easily through the pores between the inorganic particles by adjusting the aspect ratio of the inorganic particles in the above-described range, and especially as a monodisperse, the smaller the aspect ratio and the smaller the BET specific surface area, the movement of the polymer binders within the coating layer may be excellent.

According to one embodiment of the present disclosure, the inorganic particles may have a BET specific surface area of 5 $m^2/g$ or more to 25 $m^2/g$ or less. Specifically, the inorganic particles may have a BET specific surface area of 6 $m^2/g$ or more to 24 $m^2/g$ or less, 7 $m^2/g$ or more to 23 $m^2/g$ or less, 8 $m^2/g$ or more to 22 $m^2/g$ or less, 9 $m^2/g$ or more to 21 $m^2/g$ or less, 10 $m^2/g$ or more to 20 $m^2/g$ or less, 11 $m^2/g$ or more to 19 $m^2/g$ or less, 12 $m^2/g$ or more to 18 $m^2/g$ or less, 13 $m^2/g$ or more to 17 $m^2/g$ or less, or 14 $m^2/g$ or more to 26 $m^2/g$ or less. The polymer binders move easily through the pores between the inorganic particles by adjusting the BET specific surface area of the inorganic particles in the above-described range, and especially as a monodisperse, the smaller the aspect ratio and the smaller the BET specific surface area, the movement of the polymer binders within the coating layer may be excellent.

In the present specification, the BET specific surface area can be measured using the adsorption equation of the BET (Brunauer, Emmett and Teller) model, and when the adsorption isotherm curve is measured up to 1 bar (1 atmosphere) at the nitrogen boiling point of -196°C, it can be calculated by measuring the adsorption amount from the measured $N_2$ adsorption isotherm.

According to one embodiment of the present disclosure, the polymer binder mixture contains three or more polymer binders having different glass transition temperatures. As described above, the polymer binder mixture includes three or more polymer binders having different glass transition temperatures, and thus the adhesive force between the polymer substrate and the coating layer can be improved, the contact area between the other polymer binders and the inorganic particles can be increased to improve the cohesive force, the dry adhesion can be prevented from deteriorating, and the adhesive force between the electrode and the separator can be prevented from deteriorating when the polymer binders sink to the bottom of the inorganic particles.

According to one embodiment of the present disclosure, each of the three or more polymer binders having different glass transition temperatures may be in a particle form. As described above, each of three or more polymer binders having different glass transition temperatures, which are in the form of particles, is used so that, in the porous coating layer, the inorganic particles and polymer binders are bound to each other by the binder polymers in a state in which they are filled and come into contact with each other, an interstitial volume may be formed between the inorganic particles due to this, and the interstitial volume between the inorganic particles may become an empty space to form pores. In other words, the polymer binders attach the inorganic particles to each other so that they can maintain a state in which the inorganic particles are bound to each other, that is, the polymer binders can connect and fix between the inorganic particles. In addition, the pores of the coating layer are pores formed when the interstitial volume between the inorganic particles becomes an empty space, and these may be a space limited by the inorganic particles that are substantially surface-contacted in the filling structure (closely packed or densely packed) by the inorganic particles.

According to one embodiment of the present disclosure, the polymer binder mixture contains a first polymer binder, a second polymer binder, and a third polymer binder, and the first polymer binder, the second polymer binder, and the third polymer binder may satisfy Mathematical Equation 1 below. As described above, the polymer binder mixture contains a first polymer binder, a second polymer binder, and a third polymer binder, and the first polymer binder, the second polymer binder, and the third polymer binder satisfy Mathematical Equation 1 below, and thus the adhesive force between the polymer substrate and the coating layer can be improved, the contact area between the other polymer binders and the inorganic particles can be increased to improve the cohesive force, the dry adhesion can be prevented from deteriorating, and the adhesive force between the electrode and the separator can be prevented from deteriorating when the polymer binders sink to the bottom of the inorganic particles.

Glass transition temperature of the first polymer binder < Glass transition temperature of the second polymer binder < Glass transition temperature of the third polymer --> binder          [Mathematical Equation 1]

According to one embodiment of the present disclosure, the first polymer binder may have a glass transition temperature of -40°C or higher to -20°C or lower. The first polymer binder may have a glass transition temperature of -39°C or higher to -21°C or lower, -38°C or higher to -22°C or lower, -37°C or higher to -23°C or lower, -36°C or higher to -24°C or lower, -35°C or higher to -25°C or lower, -34°C or higher to -26°C or lower, -33°C or higher to -27°C or lower, -32°C or higher to -28°C or lower, or -3 1°C or higher to -29°C or lower. The glass transition temperature of the first polymer binder is adjusted in the above-described range, and thus the shape of the polymer binder is maintained during the drying process so that the adhesive force between the polymer substrate and the coating layer can be prevented from deteriorating, and the adhesive force of the polymer binder itself is prevented from deteriorating.

According to one embodiment of the present disclosure, the second polymer binder may have a glass transition temperature of 0°C or higher to 20°C or lower. Specifically, the second polymer binder may have a glass transition temperature of 1°C or higher to 19°C or lower, 2°C or higher to 18°C or lower, 3°C or higher to 17°C or lower, 4°C or higher to 16°C or lower, 5°C or higher to 15°C or lower, and 6°C or higher to 14°C or lower, 7°C or higher to 13°C or lower, 8°C or higher to 12°C or lower, or 9°C or higher to 11°C or lower. The glass transition temperature of the second polymer binder is adjusted in the above-described range, and thus, the cohesive force can be prevented from deteriorating when the shape of the third polymer binder collapses to deteriorate dry adhesion if the temperature is raised in order to ensure sufficient cohesive force as sufficient cohesive force is not secured in the process of drying a conventional separator.

According to one embodiment of the present disclosure, the third polymer binder may have a glass transition temperature of 30°C or higher to 60°C or lower. Specifically, the third polymer binder may have a glass transition temperature of 31°C or higher to 59°C or lower, 32°C or higher to 58°C or lower, 33°C or higher to 57°C or lower, 34°C or higher to 56°C or lower, 35°C or higher to 55°C or lower, 36°C or higher to 54°C or lower, 37°C or higher to 53°C or lower, 38°C or higher to 52°C or lower, 39°C or higher to 51°C or lower, 40°C or higher to 50°C or lower, 41°C or higher to 49°C or lower, 42°C or higher to 48°C or lower, 43°C or higher to 47°C or lower, or 44°C or higher to 46°C or lower. The adhesive force between the electrode and the separator can be prevented from deteriorating when the polymer binder sinks to the bottom of the inorganic particles by adjusting the glass transition temperature of the third polymer binder in the above-described range.

According to one embodiment of the present disclosure, the first polymer binder may have a glass transition temperature of -40°C or higher to -20°C or lower, the second polymer binder may have a glass transition temperature of 0°C or higher to 20°C or lower, and the third polymer binder may have a glass transition temperature of 30°C or higher to 60°C or lower. It was confirmed that the adhesive force between the electrode and the separator is maintained, and the cohesive force and peeling strength are improved by adjusting all of the glass transition temperature of the first polymer binder, the glass transition temperature of the second polymer binder, and the glass transition temperature of the third polymer binder in the above-described ranges.

According to one embodiment of the present disclosure, each of the first polymer binder, the second polymer binder, and the third polymer binder may have a weight average molecular weight of 1,000 or more to 10,000,000 or less. Specifically, each of the first polymer binder, the second polymer binder, and the third polymer binder may have a weight average molecular weight of 1,000 or more to 10,000,000 or less, 10,000 or more to 9,000,000 or less, 100,000 or more to 8,000,000 or less, 200,000 or more to 7,000,000 or less, 300,000 or more to 6,000,000 or less, 500,000 or more to 5,000,000 or less, 1,000,000 or more to 4,000,000 or less, or 2,000,000 or more to 3,000,000 or less. The mechanical properties of the coating layer can be realized, and the adhesion to the polymer substrate can be improved by adjusting the weight average molecular weight of each of the first polymer binder, the second polymer binder, and the third polymer binder in the above-described range.

In the present specification, the weight average molecular weight (Mw) can be measured by gel permeation chromatography (GPC, PL GPC220, Agilent Technologies), and measurement conditions can be set as follows.

- Column: PL Olexis (Polymer Laboratories)
- Solvent: Trichlorobenzene (TCB)
- Flow rate: 1.0 ml/min
- Sample concentration: 1.0 mg/ml

- Injection volume: 200 $\mu\ell$
- Column temperature: 160°C
- Detector: Agilent High Temperature RI detector
- Standard: Polystyrene (corrected with cubic function)

According to one embodiment of the present disclosure, the first polymer binder may be contained in an amount of 5 parts by weight or more to 15 parts by weight or less based on 100 parts by weight of the polymer binder mixture. Specifically, the first polymer binder may be contained in an amount of 6 parts by weight or more to 14 parts by weight or less, 7 parts by weight or more to 13 parts by weight or less, 8 parts by weight or more to 12 parts by weight or less, or 9 parts by weight or more to 11 parts by weight or less based on 100 parts by weight of the polymer binder mixture. The adhesive force between the polymer substrate and the coating layer can be improved by adjusting the content of the first polymer binder in the above-described range.

According to one embodiment of the present disclosure, the second polymer binder may be contained in an amount of 20 parts by weight or more to 40 parts by weight or less based on 100 parts by weight of the polymer binder mixture. Specifically, the second polymer binder may be contained in an amount of 11 parts by weight or more to 39 parts by weight or less, 22 parts by weight or more to 38 parts by weight or less, 23 parts by weight or more to 37 parts by weight or less, 24 parts by weight or more to 36 parts by weight or less, 25 parts by weight or more to 35 parts by weight or less, 26 parts by weight or more to 34 parts by weight or less, 27 parts by weight or more to 33 parts by weight or less, 28 parts by weight or more to 32 parts by weight or less, or 29 parts by weight or more to 31 parts by weight or less based on 100 parts by weight of the polymer binder mixture. The contact area between the other polymer binders and the inorganic particles can be increased to improve the cohesive force, and the dry adhesion can be prevented from deteriorating by adjusting the content of the second polymer binder in the above-described range.

According to one embodiment of the present disclosure, the third polymer binder may be contained in an amount of 50 parts by weight or more to 70 parts by weight or less based on 100 parts by weight of the polymer binder mixture. Specifically, the third polymer binder may be contained in an amount of 51 parts by weight or more to 69 parts by weight or less, 52 parts by weight or more to 68 parts by weight or less, 53 parts by weight or more to 67 parts by weight or less, 54 parts by weight or more to 66 parts by weight or less, 55 parts by weight or more to 65 parts by weight or less, 56 parts by weight or more to 64 parts by weight or less, 57 parts by weight or more to 63 parts by weight or less, 58 parts by weight or more to 62 parts by weight or less, or 59 parts by weight or more to 61 parts by weight or less based on 100 parts by weight of the polymer binder mixture. The adhesive force between the electrode and the separator can be prevented from deteriorating when the polymer binder sinks to the bottom of the inorganic particles by adjusting the content of the third polymer binder in the above-described range.

According to one embodiment of the present disclosure, the amount of the first polymer binder contained in one portion 131 to which the polymer substrate of the thickness of the coating layer 130 is adjacent may be greater than that of the first polymer binder contained in the other portion 133 to which the polymer substrate thereof is not adjacent. Specifically, the first polymer binder may be contained in a larger amount in one portion 131 of the coating layer that is a portion closer to the polymer substrate in the coating layer than the other portion 133 of the coating layer that is a portion distant from the polymer substrate in the coating layer. The adhesive force between each of the electrode and the polymer substrate and the coating layer can be improved by adjusting the content of the first polymer binder according to the position of the coating layer as described above. Specifically, the adhesive force between the electrode and the separator can be prevented from deteriorating when the polymer binder sinks to the bottom of the inorganic particles by containing the first polymer binder in an excessive amount in one portion to which the polymer substrate is adj acent.

In the present specification, the thickness of the coating layer may mean a width between one surface of the coating layer which is provided with the polymer substrate in a direction in which the coating layer is laminated on the polymer substrate and the other surface of the coating layer which is not provided with the polymer substrate.

According to one embodiment of the present disclosure, the amount of the third polymer binder contained in the other portion 133 to which the polymer substrate of the thickness of the coating layer 130 is not adjacent may be greater than that of the third polymer binder contained in one portion 131 to which the polymer substrate thereof is adjacent. Specifically, the third polymer binder may be contained in a larger amount in the other portion 133 of the coating layer that is a portion distant from the polymer substrate in the coating layer than one portion 131 of the coating layer that is a portion close to the polymer substrate in the coating layer. The adhesive force between each of the electrode and the polymer substrate and the coating layer can be improved by adjusting the content of the third polymer binder according to the position of the coating layer as described above. Specifically, the third polymer binder is contained in an excessive amount on the surface of the coating layer, and thus the shape of the third polymer binder is maintained during the drying process of the applied coating layer so that the adhesive force between the polymer substrate and the coating layer can be prevented from deteriorating, and the adhesive force of the polymer binder itself is prevented from deteriorating.

According to one embodiment of the present disclosure, the second polymer binder may be contained in a uniform amount in the coating layer 130. Specifically, in the coating layer 130, the second polymer binder may be contained in the same amount in each of one portion 131 of the coating layer and the other portion 133 of the coating layer. The cohesive force between the polymer binders and the inorganic particles in the coating layer can be improved by allowing the content of the second polymer binder to be kept the same regardless of the location as described above.

According to one embodiment of the present disclosure, the first polymer binder, the second polymer binder, and the third polymer binder may be each a mixture which is one selected from the group consisting of an acrylic polymer resin, a vinylidene fluoride-based polymer resin, and a combination thereof, and/or a polymer of the mixture. According to one embodiment of the present disclosure, the first polymer binder, the second polymer binder, and the third polymer binder may be each a mixture which is one selected from the group consisting of an acrylic polymer resin, a vinylidene fluoride-based polymer resin, and a combination thereof in one particle, and/or a polymer of the mixture. According to one embodiment of the present disclosure, the glass transition temperature of each of the first polymer binder, the second polymer binder, and the third polymer binder may be adjusted by changing the type and/or content of the components included in the first polymer binder, the second polymer binder, and the third polymer binder, respectively. Each of the first polymer binder, the second polymer binder, and the third polymer binder is selected from those described above, and thus the adhesive force between the polymer substrate and the coating layer can be improved, the contact area between the other polymer binders and the inorganic particles can be increased to improve the cohesive force, the dry adhesion can be prevented from deteriorating, and the adhesive force between the electrode and the separator can be prevented from deteriorating when the polymer binders sink to the bottom of the inorganic particles.

According to one embodiment of the present disclosure, the acrylic polymer resin is a polymer containing carboxylic acid ester as a repeating unit, and may specifically be (meth)acrylic acid ester. More specifically, (meth)acrylic acid ester may be one selected from the group consisting of methyl (meth)acrylate, ethyl (meth)acrylate, n-propyl (meth) acrylate, i-propyl (meth)acrylate, n-butyl (meth)acrylate, i-butyl (meth)acrylate, n-amyl (meth)acrylate, i-amyl (meth) acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, ethylene di(meth)acrylate, and combinations thereof. Preferably, (meth)acrylic acid ester is one or more selected from methyl (meth)acrylate, ethyl (meth)acrylate, and 2-ethylhexyl (meth)acrylate. The mechanical properties of the coating layer can be improved, and the binding force with the polymer substrate can be improved by selecting the acrylic polymer resin from those described above.

According to one embodiment of the present disclosure, the acrylic polymer resin may be a copolymer containing styrene and acrylate at a weight ratio of 5:5 to 7:3. According to one embodiment of the present disclosure, acrylate copolymerized with styrene may be butyl acrylate. At this time, it is undesirable since it may be difficult to form a dry state adhesive force under the conditions of the lamination process (50 to 80°C) because the glass transition temperature (Tg) increases when the content of styrene is greater than the above-described range, or the content of acrylate is less than the above-described range, and it is undesirable since the layer structure collapses at room temperature so that it may be difficult to form the dry state adhesive force because the glass transition temperature (Tg) is lowered when the content of styrene is less than the above-described range, or the content of acrylate is greater than the above-described range.

According to one embodiment of the present disclosure, the vinylidene fluoride-based polymer resin is insoluble in an electrolyte solution and may be homopolymers of vinylidene fluoride, copolymers of other monomer polymerizable with vinylidene fluoride, or mixtures of two or more thereof.

According to one embodiment of the present disclosure, the other monomer polymerizable with vinylidene fluoride may include one or more selected from the group consisting of tetrafluoroethylene, hexafluoropropylene, trifluoroethylene, chlorofluoroethylene, 1,2-difluoroethylene, perfluoro(methylvinyl)ether, perfluoro(ethylvinyl)ether, perfluoro(propylvinyl)ether, perfluoro(1,3-dioxol), perfluoro(2,2-dimethyl-1,3-dioxole), trichlorethylene, and vinyl fluoride, but is not limited thereto. In particular, the vinylidene fluoride-based polymer resin may be a copolymer of vinylidene fluoride and hexafluoropropylene. The other monomer polymerizable with vinylidene fluoride may be contained in an amount of 1% by weight to 20% by weight of the copolymer, but is not limited thereto.

In the present specification, the comonomer content in the vinylidene fluoride-based polymer resin may be measured by a method of 1H-NMR using Varian 500 MHz. Detailed measurement methods may be referred to Journal of Materials Chemistry, 2012, 22, 341 or AMT-3412-0k. For confirmation of the NMR spectrums, suitable equipment such as Bruker Avance III HD 700Mhz NMR or Varian 500MHz NMR may be used.

According to one embodiment of the present disclosure, the acrylic polymer resin and the vinylidene fluoride-based polymer resin may have a weight ratio of 9:1 to 1:9. When the content of the acrylic polymer resin is greater than the above-described range, or the content of the vinylidene fluoride-based polymer resin is less than the above-described range, it is undesirable since the wet state adhesive force is not formed, and when the content of the acrylic polymer resin is less than the above-described range, or the content of the vinylidene fluoride-based polymer resin is greater than the above-described range, it is undesirable since it may be difficult to form the dry state adhesive force.

According to one embodiment of the present disclosure, the vinylidene fluoride-based polymer resin may be a copolymer in which a vinylidene fluoride-based polymer resin containing 10% by weight or less of hexafluoropropylene (HFP), and acrylate are crosslinked at a weight ratio of 1:9 to 9:1. At this time, when the content of the vinylidene fluoride-based polymer resin is greater than the above-described range, or the content of acrylate is less than the above-described range, it is undesirable since it is difficult to form the wet state adhesive force, and when the content of the vinylidene fluoride-based polymer resin is less than the above-described range, or the content of acrylate is greater than the above-described range, it is undesirable since it may be difficult to prepare the composition for forming a coating layer.

According to one embodiment of the present disclosure, the acrylic polymer resin may be contained in an amount of 4% by weight to 95% by weight, and the vinylidene fluoride-based polymer resin may be contained in an amount of 4% by weight to 95% by weight based on the total content of the first polymer binder, the second polymer binder, and the third polymer binder. If the content is outside such a content range, the resistance of the separator may increase, and the side effect of making it difficult to form adhesion may occur.

One embodiment of the present disclosure is a method for manufacturing the separator 100 for an electrochemical device, and provides a method for manufacturing a separator 100 for an electrochemical device, the method including steps of: coating at least one surface of the polymer substrate 110 with a composition for forming a coating layer, which includes the polymer binder mixture containing three or more polymer binders having different glass transition temperatures and the inorganic particles (S30); and drying the coated composition for forming a coating layer to form the coating layer 130 (S50).

The method for manufacturing the separator 100 for an electrochemical device according to one embodiment of the present disclosure can improve the cohesive force between the inorganic particles and the polymer binders by controlling the temperature of the drying process, and can improve each of the adhesive force between the polymer substrate 110 and the coating layer 130 and the adhesive force between the electrode (not shown) and the coating layer 130 by adjusting the contents of the first polymer binder and the third polymer binder depending on the position of the coating layer 130.

FIG. 2 is a flowchart of a method for manufacturing an electrochemical device separator 100 according to one embodiment of the present disclosure. With reference to FIG. 2, the method for manufacturing a separator 100 for an electrochemical device, which is one embodiment of the present disclosure, will be described in detail. Furthermore, in the present specification, parts that overlap with the contents described in the electrochemical device separator will be omitted.

According to one embodiment of the present disclosure, it includes a step S30 of coating at least one surface of the polymer substrate 110 with a composition for forming a coating layer, which includes the polymer binder mixture containing three or more polymer binders having different glass transition temperatures and the inorganic particles. The coating layer can be easily formed on the polymer substrate, and the separator manufacturing time can be reduced to manufacture the separator in large quantities by including the step S30 of coating at least one surface of the polymer substrate 110 with a composition for forming a coating layer, which includes the polymer binder mixture containing three or more polymer binders having different glass transition temperatures and the inorganic particles as described above.

According to one embodiment of the present disclosure, a method for coating the composition for forming a coating layer on at least one surface of the polymer substrate may be a bar coater, a wire bar coater, a roll coater, a spray coater, a spin coater, an inkjet coater, a screen coater, a reverse coater, a gravure coater, a knife coater, a slot die coater, a hot melt coater, a comma coater, a direct metering coater, etc., and the coating method in the process of manufacturing the separator may be applied without limitation.

According to one embodiment of the present disclosure, it includes a step S50 of drying the coated composition for forming a coating layer to form the coating layer 130. As described above, the step S50 of drying the coated composition for forming a coating layer to form the coating layer 130 is included, and thus the coating layer can be easily formed on the polymer substrate, and a decrease in the adhesive force of the separator and a decrease in the cohesive force between the polymer binder and the inorganic particles can be prevented when the second polymer binder included in the composition for forming a coating layer sinks to the bottom portion of the inorganic particles, that is, in a direction that is inward from the surface of the coating layer.

According to one embodiment of the present disclosure, the drying temperature may be 30°C or higher to 70°C or lower. Specifically, the drying temperature may be 31°C or higher to 69°C or lower, 32°C or higher to 68°C or lower, 33°C or higher to 67°C or lower, 34°C or higher to 66°C or lower, 35°C or higher to 65°C or lower, 36°C or higher to 64°C or lower, 37°C or higher to 63°C or lower, 38°C or higher to 62°C or lower, 39°C or higher to 61°C or lower, 40°C or higher to 60°C or lower, 41°C or higher to 59°C or lower, 42°C or higher to 58°C or lower, 43°C or higher to 57°C or lower, 44°C or higher to 56°C or lower, 45°C or higher to 55°C or lower, 46°C or higher to 54°C or lower, 47°C or higher to 53°C or lower, 48°C or higher to 52°C or lower, or 49°C or higher to 51°C or lower. The drying temperature is adjusted in the above-described range, and thus the cohesive force of the coating layer itself can be improved, the dry adhesion can be prevented from deteriorating when the bond between the electrode and polymer binders of the separator collapses at high temperatures can be prevented, and the adhesive force can be prevented from deteriorating when the polymer binders sink to the bottom of the inorganic particles.

According to one embodiment of the present disclosure, the difference between the drying temperature and the glass transition temperature of the second polymer binder may be within 10°C. Specifically, the difference between the drying temperature and the glass transition temperature of the second polymer binder may be within 9°C, within 8°C, within 7°C, within 6°C, within 5°C, within 4°C, within 3°C, within 2°C, or within 1°C. In the above-described range, the difference between the drying temperature and the glass transition temperature of the second polymer binder is controlled, and thus the cohesive force of the coating layer itself can be improved, the dry adhesion can be prevented from deteriorating when the bond between the electrode and polymer binders of the separator collapses at high temperatures can be prevented, and the adhesive force can be prevented from deteriorating when the polymer binders sink to the bottom of the inorganic particles.

According to one embodiment of the present disclosure, it may further include, before the coating step S30, a step S10 of preparing a composition for forming a coating layer, which includes the polymer binder mixture containing three or more polymer binders having different glass transition temperatures, and the inorganic particles. As described above, it further includes, before the coating step S30, the step S10 of preparing a composition for forming a coating layer, which includes the polymer binder mixture containing three or more polymer binders having different glass transition temperatures, and the inorganic particles, and thus the composition for forming a coating layer can be easily handled, the viscosity of the composition for forming a coating layer can be adjusted to adjust the thickness of the coating layer, the rate of evaporating the solvent of the composition for forming a coating layer can be adjusted, and the formation speed of the coating layer can be adjusted.

According to one embodiment of the present disclosure, it may further include a step of corona discharge-treating at least one surface of the polymer substrate. The step of corona discharge-treating at least one surface of the polymer substrate can be performed without limitation as long as it is before the step S30 of coating at least one surface of the polymer substrate with the composition for forming a coating layer. Specifically, the polymer substrate may have been subjected to the corona discharge treatment in the step S30 of coating at least one surface of the polymer substrate with the composition for forming a coating layer. As described above, it includes the step of corona discharge-treating at least one surface of the polymer substrate, and thus a decrease in the binding force between the surface of the polymer substrate and the surface of the coating layer can be prevented at high temperatures, and a decrease in the binding force between the surface of the polymer substrate and the surface of the coating layer by the electrolyte can be prevented.

According to one embodiment of the present disclosure, the corona discharge treatment may be performed at a voltage of 0.1 kV or more to 10 kV or less in air. Specifically, the corona discharge treatment may be performed at a voltage of 0.2 kV or more to 9 kV or less, 0.3 kV or more to 8 kV or less, 0.4 kV or more to 7 kV or less, 0.5 kV or more to 6 kV or less, 0.6 kV or more to 5 kV or less, 0.7 kV or more to 4 kV or less, 0.8 kV or more to 3 kV or less, 0.9 kV or more to 2 kV or less, or 1.0 kV or more to 2 kV or less in air. Preferably, the corona discharge treatment may be performed at a voltage of 1.8 kV in air. The applied voltage of the corona discharge treatment is adjusted in the above-described range, and thus an appropriate number of functional groups can be formed on the surface of the polymer substrate, and damage to the surface of the polymer substrate can be prevented.

One embodiment of the present disclosure provides an electrochemical device including a cathode, an anode, and a separator 100 interposed between the cathode and the anode, wherein the separator 100 is a separator for the electrochemical device.

The electrochemical device according to one embodiment of the present disclosure can prevent the coating layer from being detached due to impact during the process of cutting and handling the separator 100 and the process of assembling the battery.

According to one embodiment of the present disclosure, the cathode includes a cathode current collector, and a cathode active material layer containing a cathode active material, a conductive material, and a binder resin on at least one surface of the cathode current collector. The cathode active material may include one of: layered compounds such as lithium manganese composite oxide ($LiMn_2O_4$, $LiMnO_2$, etc.), lithium cobalt oxide ($LiCoO_2$), and lithium nickel oxide ($LiNiO_2$), or compounds substituted with one or more transition metals; lithium manganese oxides with the formula $Li_{1+x}Mn_{2-x}O_4$ (where x is 0 to 0.33), $LiMnO_3$, $LiMn_2O_3$, $LiMnO_2$, etc.; lithium copper oxide ($Li_2CuO_2$); vanadium oxides such as $LiVsOs$, $LiV_3O_4$, $V_2O_5$, $Cu_2V_2O_7$, etc.; Ni site-type lithium nickel oxides represented by the formula $LiNi_{1-x}M_xO_2$ (where M = Co, Mn, Al, Cu, Fe, Mg, B, or Ga, and x = 0.01 to 0.3); lithium manganese complex oxides expressed by the formula $LiMn_{1-x}M_xO_2$ (where M = Co, Ni, Fe, Cr, Zn, or Ta, and x = 0.01 to 0.1) or $Li_2Mn_3MO_8$ (where M = Fe, Co, Ni, Cu, or Zn); $LiMn_2O_4$ in which part of Li in the formula is replaced with an alkaline earth metal ion; disulfide compounds; and $Fe_2(MoO_4)_3$, or mixtures of two or more thereof.

According to one embodiment of the present disclosure, the anode includes an anode current collector, and an anode active material layer containing an anode active material, a conductive material, and a binder resin on at least one surface of the anode current collector. The anode may include, as an anode active material, one or mixtures of two or more selected from: carbons such as lithium metal oxide, non-graphitizable carbon, graphite-based carbon, etc.; silicon-based materials such as $Li_xFe_2O_3$ ($0 \leq x \leq 1$), $Li_xWO_2$ ($0 \leq x \leq 1$), Si, $SiO_x$ ($0 < x < 2$), SiC, Si alloys, etc.; metal complex oxides such as $Sn_xMe_{1-x}Me'_yO_z$ (Me: Mn, Fe, Pb, or Ge; Me': Al, B, P, Si, elements of groups 1, 2, and 3 of the periodic table, and halogens;

$0 \leq x \leq 1$; $1 \leq y \leq 3$; $1 \leq z \leq 8$), etc.; lithium metal; lithium alloys; tin-based alloys; metal oxides such as $SnO$, $SnO_2$, $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, and $Bi_2O_5$; conductive polymers such as polyacetylene, etc.; Li-Co-Ni based materials; and titanium oxides.

According to one embodiment of the present disclosure, the cathode current collector and/or the anode current collector are not particularly limited as long as they have high conductivity without causing chemical changes in the electrochemical device, and specifically stainless steel, copper, aluminum, nickel, titanium, calcined carbon, or aluminum or stainless steel surface treated with carbon, nickel, titanium, silver, etc. may be used.

According to one embodiment of the present disclosure, the conductive material may be one selected from the group consisting of graphite, carbon black, carbon fibers or metal fibers, metal powders, conductive whiskers, conductive metal oxides, carbon nanotubes, activated carbon, and polyphenylene derivatives, or mixtures of two or more conductive materials thereof. Carbon nanotubes have a graphite sheet in the shape of a cylinder with a nano-sized diameter and a $sp^2$ bond structure, and exhibit conductor or semiconductor characteristics depending on the angle and structure at which the graphite sheet is rolled. Depending on the number of bonds forming the wall, carbon nanotubes may be divided into a single-walled carbon nanotube (SWCNT), a double-walled carbon nanotube (DWCNT), and a multi-walled carbon nanotube (MWCNT), and these carbon nanotubes may be appropriately selected depending on the uses of the dispersion. More specifically, it may be one selected from the group consisting of natural graphite, artificial graphite, super-p, acetylene black, Ketjen black, channel black, furnace black, lamp black, summer black, denka black, aluminum powder, nickel powder, zinc oxide, potassium titanate, and titanium oxide, or mixtures of two or more conductive materials thereof.

According to one embodiment of the present disclosure, binder resins commonly used in electrodes in the art can be used as the binder resin. Non-limiting examples of such binder resins may include polyvinylidene fluoride-co-hexafluoropropylene, polyvinylidene fluoride-co-trichloroethylene, polymethylmethacrylate, polyetylhexyl acrylate, polybutylacrylate, polyacrylonitrile, polyvinylpyrrolidone, polyvinylacetate, ethylene vinyl acetate copolymer (polyethylene-co-vinyl acetate), polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methylcellulose, but are not limited thereto.

According to one embodiment of the present disclosure, an electrode assembly includes a cathode, an anode, and a separator interposed between the cathode and the anode, and an electrochemical device can be manufactured by loading the electrode assembly into an appropriate case and injecting an electrolyte solution.

According to one embodiment of the present disclosure, the electrolyte solution is a salt with a structure such as $A^+B^-$, wherein the salt in which $A^+$ includes ions consisting of alkali metal cations such as $Li^+$, $Na^+$, and $K^+$, or combinations thereof, and $B^-$ includes ions consisting of anions such as $PF_6^-$, $BF_4^-$, $Cl^-$, $Br^-$, $I^-$, $ClO4^-$, $AsF_6^-$, $CH_3CO_2^-$, $CF_3SO_3^-$, $N(CF_3SO_2)_2^-$, and $C(CF_2SO_2)_3^-$, or combinations thereof may be dissolved or dissociated in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone ($\gamma$-butyrolactone), or mixtures thereof, but is not limited thereto.

According to one embodiment of the present disclosure, there are provided a battery module including, as a unit cell, a battery which includes the electrode assembly, a battery pack including the battery module, and a device including the battery pack as a power source. Specific examples of the device may include a power tool that is powered by an omni-electric motor and moves; electric cars including an electric vehicle (EV), a hybrid electric vehicle (HEV), a plug-in hybrid electric vehicle (PHEV), etc.; electric two-wheeled vehicles including an electric bicycle (E-bike) and an electric scooter (E-scooter); an electric golf cart; power storage systems; etc., but are not limited thereto.

Mode for Invention

Hereinafter, it will be described in detail through Examples in order to explain the present disclosure in detail. However, the Examples according to the present disclosure may be modified into various other forms, and the scope of the present disclosure should not be construed as being limited to the Examples described below. The Examples of the present specification are provided to more completely explain the present disclosure to those skilled in the art.

**<Examples 1 and 2 and Reference Examples 1 to 4>**

Preparation of composition for forming coating layer

$Al_2O_3$, inorganic particles, and polyacrylic acid, a dispersant, were put into distilled water at room temperature at a content ratio of 4 times the total of the respective contents of a first polymer binder, a second polymer binder, and a third polymer binder, and then bead milled (0.7 $\mu$m zirconia beads were inputted in the same weight as the inorganic particles and milled for 2 hours using a paint shaker) to prepare an inorganic dispersion. The first polymer binder, the second polymer binder, and the third polymer binder each having glass transition temperatures (Tg) as shown in Table 1 below were inputted into the inorganic dispersion at the weight ratios shown in Table 2 below.

The first polymer binder is a copolymer of methyl methacrylate and 2-ethylhexyl acrylate, and was prepared to have glass transition temperatures shown in Table 1 below by adjusting the weight ratio of methyl methacrylate and 2-ethylhexyl acrylate.

Each of the second polymer binder and the third polymer binder is a copolymer of styrene and butyl acrylate, and was prepared to have glass transition temperatures shown in Table 1 below by adjusting the weight ratio of styrene and butyl acrylate.

To improve the wettability with the polymer substrate, a siloxane-based surfactant, a surfactant, was additionally inputted, and stirred at 10 rpm for 10 minutes to prepare a slurry that is a composition for forming a coating layer, in which the first polymer binder, the second polymer binder, the third polymer binder, and the inorganic particles were dispersed.

<u>Polymer substrate preparation</u>

A polyethylene film (PE, weight average molecular weight of 900,000, porosity of 40% by volume) with a thickness of 9 $\mu$m was used as a porous polymer substrate with multiple pores.

<u>Manufacturing of separator</u>

The slurry, which is the composition for forming a coating layer, was coated on both surfaces of the polyethylene film, which is the prepared polymer substrate, respectively, using a doctor blade, and dried using a hot air blower to form a coating layer with a thickness of 2.5 $\mu$m for each coating and manufacture a separator with a total thickness of 14 $\mu$m.

**<Comparative Example 1>**

A separator was manufactured in the same manner as in Example 1 except that the second polymer binder was not included in the composition for forming a coating layer of Example 1.

[Table 1]

|  | Example 1 | Example 2 | Comparative Example 1 | Reference Example 1 | Reference Example 2 | Reference Example 3 | Reference Example 4 |
|---|---|---|---|---|---|---|---|
| Glass transition temperature of first polymer binder (unit: °C) | -30 | -30 | -45 | -45 | -30 | -30 | -15 |
| Glass transition temperature of second polymer binder (unit: °C) | 10 | 10 | - | 10 | -5 | 25 | 10 |
| Glass transition temperature of third polymer binder (unit: °C) | 40 | 50 | 40 | 40 | 40 | 40 | 40 |

[Table 2]

|  | Example 1 | Example 2 | Comparative Example 1 | Reference Example 1 | Reference Example 2 | Reference Example 3 | Reference Example 4 |
|---|---|---|---|---|---|---|---|
| Content of first polymer binder (unit: % by weight) | 10 | 10 | 10 | 10 | 10 | 10 | 10 |

(continued)

| | Example 1 | Example 2 | Comparative Example 1 | Reference Example 1 | Reference Example 2 | Reference Example 3 | Reference Example 4 |
|---|---|---|---|---|---|---|---|
| Content of second polymer binder (unit: % by weight) | 30 | 30 | 0 | 30 | 30 | 30 | 30 |
| Content of third polymer binder (unit: % by weight) | 60 | 60 | 90 | 60 | 60 | 60 | 60 |

**<Experimental Example 1: Measurement of peel strength>**

Specimens were prepared by cutting each of the separators manufactured in Examples 1 to 2, Comparative Example 1, and Reference Examples 1 to 4 into 70 mm (length) × 15 mm (width). The prepared specimens were attached and fixed to a slide glass using a double-sided tape. Afterwards, the distal ends (10 mm or less from the ends of the adhesive surfaces) of the adhesive surfaces of the specimens were detached and attached to a 25 mm × 100 mm PET film so as to be connected thereto in the longitudinal direction using a single-sided adhesive tape. Afterwards, the slide glass was mounted on the lower holder of UTM equipment (LLOYD Instrument LF Plus), and then the PET film attached to the separators was mounted on the upper holder of the UTM equipment, and the forces required to peel off the separators from the slide glass were measured by applying force at 180° at a measurement speed of 300 mm/min.

**<Experimental Example 2: Measurement of adhesive force between electrode and separator>**

To measure the adhesive force between the electrode and the separator, the anode was prepared as follows.
First, in the anode, an anode slurry was prepared by mixing artificial graphite, carbon black, carboxymethyl cellulose (CMC), and styrene-butadiene rubber (SBR) with water at a weight ratio of 96:1:2:2. After the anode slurry was coated on a copper foil (Cu-foil) at a capacity of 3.5 mAh/cm$^2$ to form it into the form of a thin electrode plate, it was dried at 135°C for 3 hours or more, and then pressed to manufacture an anode.
The manufactured anode was prepared by cutting it into a size of 2.5 cm × 6 cm. The separators manufactured in Examples and Comparative Example were prepared by cutting them into a size of 2.5 cm × 6 cm. The prepared separators and anode were overlapped with each other and sandwiched between 100 μm PET films, and then adhered using a flat press. At this time, they were heated and pressurized under the conditions of the flat press machine at 80°C and a pressure of 6.5 MPa for 1 second. The bonded separators and anode were attached to a slide glass using a double-sided tape. The distal ends (10 mm or less from the ends of the adhesive surfaces) of the adhesive surfaces of the separators were detached and attached to a 25 mm × 100 mm PET film so as to be connected thereto in the longitudinal direction using a single-sided adhesive tape. Afterwards, the slide glass was mounted on the lower holder of UTM equipment (LLOYD Instrument LF Plus), and then the PET film attached to the separators was mounted on the upper holder of the UTM equipment, and the forces required to peel off the separators from the anode were measured by applying force at 180° at a measurement speed of 300 mm/min.

**<Experimental Example 3: Measurement of cohesive force of coating layer>**

Specimens were prepared by cutting each of the separators manufactured in Examples 1 to 2, Comparative Example 1, and Reference Examples 1 to 4 into 70 mm (length) × 15 mm (width). SAICAS EN-EX equipment (DAIPLLA WINTES) was used to press a blade into the specimens at an angle of 60° from the surfaces of the specimens, and the vertical forces and horizontal forces generated during the press-fit process were measured to obtain the cutting forces by the vector sum of the two forces.

[Table 3]

| | Example 1 | Example 2 | Comparative Example 1 | Reference Example 1 | Reference Example 2 | Reference Example 3 | Reference Example 4 |
|---|---|---|---|---|---|---|---|
| Peel strength (gf/15 min) | 40 | 38 | 15 | 15 | 42 | 35 | 10 |

(continued)

| | Example 1 | Example 2 | Comparative Example 1 | Reference Example 1 | Reference Example 2 | Reference Example 3 | Reference Example 4 |
|---|---|---|---|---|---|---|---|
| Adhesive force between electro-de/separa tor (gf/25 min) | 65 | 55 | 65 | 65 | 65 | 70 | 65 |
| Cohesive force (gf) | 20 | 20 | 6 | 20 | 12 | 12 | 20 |

Referring to Table 3, it was confirmed that the cohesive force between the inorganic particles and the third binder was deteriorated so that the peel strength was rapidly deteriorated in Comparative Example 1 in which the glass transition temperature of the first polymer binder is lower than -40°C, and which does not include the second polymer binder.

In comparison, it was confirmed that the cohesive force and peel strength were improved, and the adhesive forces between the electrodes and the separators were all maintained in Examples 1 and 2 in which the glass transition temperature of the first polymer binder is -40°C or higher to -20°C or lower, the glass transition temperature of the second polymer binder is 0°C or higher to 20°C or lower, and the glass transition temperature of the third polymer binder is 30°C or higher to 60°C or lower. Additionally, it was confirmed that the holding force of the first polymer binder between the polymer substrate and the inorganic particles was weakened so that the peel strength was deteriorated in Reference Example 1 in which the glass transition temperature of the first polymer binder is less than -40°C.

Additionally, it was confirmed that the adhesive force and the cohesive force between the inorganic particles and the polymer binder were deteriorated in Reference Example 2 in which the glass transition temperature of the second polymer binder was less than 0°C.

In addition, in Reference Example 3 in which the glass transition temperature of the second polymer binder is higher than 20°C, sufficient cohesive force was not secured during the process of drying a conventional separator, and when the temperature is raised in order to secure sufficient cohesive force, the shape of the third polymer binder collapsed so that it was confirmed that dry adhesion was deteriorated to deteriorate the cohesive force.

In addition, it was confirmed that the peel strength was deteriorated since the adhesive force between the polymer substrate and the coating layer was deteriorated while the particle shape of the polymer binder did not collapse during the drying process in Reference Example 4 in which the glass transition temperature of the first polymer binder is higher than -20°C.

It was confirmed that a separator for an electrochemical device according to one embodiment of the present disclosure, a manufacturing method thereof, and an electrochemical device including the same maintain the adhesive force between the electrode and the separator and improve the cohesive force and peel strength by controlling the glass transition temperatures of the polymer binders contained in the coating layer.

In the present specification, preferred embodiments of the present disclosure have been disclosed, and although specific terms have been used, they have merely been used in a general sense to easily explain the technical content of the present disclosure and aid understanding of the invention, and are not intended to be limiting the scope of the present disclosure. Furthermore, although the present disclosure has been described above in terms of limited embodiments, the present disclosure is not limited thereto, and various modifications and variations can be made by those skilled in the art to which the present disclosure pertains within the scope of equivalency of the technical idea of the present disclosure and the scope of the claims to be described below.

**Claims**

1. A separator for an electrochemical device, comprising:

    a polymer substrate containing a plurality of pores; and
    a coating layer which is provided on at least one surface of the polymer substrate, contains a plurality of pores, and comprises inorganic particles and a polymer binder mixture,
    wherein the polymer binder mixture contains three or more polymer binders having different glass transition temperatures.

2. The separator for an electrochemical device of claim 1,

wherein the polymer binder mixture contains a first polymer binder, a second polymer binder, and a third polymer binder, and

the first polymer binder, the second polymer binder, and the third polymer binder satisfy the following Mathematical Equation 1:

[Mathematical Equation 1]
Glass transition temperature of the first polymer binder < Glass transition temperature of the second polymer binder < Glass transition temperature of the third polymer binder.

3. The separator for an electrochemical device of claim 2, wherein the first polymer binder has a glass transition temperature of -40°C or higher to -20°C or lower.

4. The separator for an electrochemical device of claim 2, wherein the second polymer binder has a glass transition temperature of 0°C or higher to 20°C or lower.

5. The separator for an electrochemical device of claim 2, wherein the third polymer binder has a glass transition temperature of 30°C or higher to 60°C or lower.

6. The separator for an electrochemical device of claim 2, wherein the first polymer binder has a glass transition temperature of -40°C or higher to -20°C or lower, the second polymer binder has a glass transition temperature of 0°C or higher to 20°C or lower, and the third polymer binder has a glass transition temperature of 30°C or higher to 60°C or lower.

7. The separator for an electrochemical device of claim 2,

wherein the first polymer binder is contained in an amount of 5 parts by weight or more to 15 parts by weight or less based on 100 parts by weight of the polymer binder mixture,
the second polymer binder is contained in an amount of 20 parts by weight or more to 40 parts by weight or less based on 100 parts by weight of the polymer binder mixture, and
the third polymer binder is contained in an amount of 50 parts by weight or more to 70 parts by weight or less based on 100 parts by weight of the polymer binder mixture.

8. The separator for an electrochemical device of claim 2, wherein the amount of the first polymer binder contained in one portion to which the polymer substrate of the thickness of the coating layer is adjacent is greater than that of the first polymer binder contained in the other portion to which the polymer substrate thereof is not adjacent.

9. The separator for an electrochemical device of claim 2, wherein the amount of the third polymer binder contained in the other portion to which the polymer substrate of the thickness of the coating layer is not adjacent is greater than that of the third polymer binder contained in one portion to which the polymer substrate thereof is adjacent.

10. The separator for an electrochemical device of claim 2, wherein the second polymer binder is contained in a uniform amount in the coating layer.

11. A method for manufacturing the separator for an electrochemical device of any one of claims 1 to 10, the method comprising steps of: coating at least one surface of the polymer substrate with a composition for forming a coating layer, which comprises the polymer binder mixture containing three or more polymer binders having different glass transition temperatures and the inorganic particles; and drying the coated composition for forming a coating layer to form the coating layer.

12. The method of claim 11, wherein the drying temperature is 30°C or higher to 70°C or lower.

13. An electrochemical device comprising a cathode, an anode, and a separator interposed between the cathode and the anode, wherein the separator is the separator for an electrochemical device according to any one of claims 1 to 10.

FIG. 1

100

FIG. 2

| Step of preparing composition for forming coating layer | S10 |
| Coating step | S30 |
| Drying step | S50 |

## INTERNATIONAL SEARCH REPORT

| International application No. |
| --- |
| **PCT/KR2023/013207** |

### A. CLASSIFICATION OF SUBJECT MATTER

**H01M 50/451**(2021.01)i; **H01M 50/446**(2021.01)i; **H01M 50/489**(2021.01)i; **H01M 50/403**(2021.01)i; **H01M 50/411**(2021.01)i; **H01M 50/443**(2021.01)i

According to International Patent Classification (IPC) or to both national classification and IPC

### B. FIELDS SEARCHED

Minimum documentation searched (classification system followed by classification symbols)

H01M 50/451(2021.01); H01M 50/40(2021.01); H01M 50/409(2021.01); H01M 50/446(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자 기재(polymer substrate), 무기물 입자(inorganic particle), 고분자 바인더 (polymer binder), 코팅층(coating layer), 유리전이온도(glass transition temperature)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2021-0127643 A (LG CHEM, LTD. et al.) 22 October 2021 (2021-10-22)<br>See paragraphs [0025]-[0107] and claims 1-4. | 1-13 |
| A | KR 10-2021-0124087 A (LG CHEM, LTD. et al.) 14 October 2021 (2021-10-14)<br>See claims 1-11. | 1-13 |
| A | KR 10-2021-0052336 A (LG CHEM, LTD.) 10 May 2021 (2021-05-10)<br>See claims 1-13. | 1-13 |
| A | KR 10-2019-0083894 A (LG CHEM, LTD.) 15 July 2019 (2019-07-15)<br>See claims 1-12. | 1-13 |
| A | KR 10-2019-0004158 A (SAMSUNG SDI CO., LTD.) 11 January 2019 (2019-01-11)<br>See claims 1-20. | 1-13 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 December 2023** | **20 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013207**

| Patent document cited in search report | | | Publication date (day/month/year) | Patent family member(s) | | | Publication date (day/month/year) |
|---|---|---|---|---|---|---|---|
| KR | 10-2021-0127643 | A | 22 October 2021 | CN | 115398735 | A | 25 November 2022 |
| | | | | EP | 4135113 | A1 | 15 February 2023 |
| | | | | JP | 2023-521137 | A | 23 May 2023 |
| | | | | US | 2023-0138202 | A1 | 04 May 2023 |
| | | | | WO | 2021-210922 | A1 | 21 October 2021 |
| KR | 10-2021-0124087 | A | 14 October 2021 | CN | 115336097 | A | 11 November 2022 |
| | | | | EP | 4131623 | A1 | 08 February 2023 |
| | | | | JP | 2023-518499 | A | 01 May 2023 |
| | | | | US | 2023-0163413 | A1 | 25 May 2023 |
| | | | | WO | 2021-206431 | A1 | 14 October 2021 |
| KR | 10-2021-0052336 | A | 10 May 2021 | CN | 114175386 | A | 11 March 2022 |
| | | | | EP | 4024598 | A1 | 06 July 2022 |
| | | | | JP | 2022-544609 | A | 19 October 2022 |
| | | | | US | 2022-0223977 | A1 | 14 July 2022 |
| | | | | WO | 2021-086088 | A1 | 06 May 2021 |
| KR | 10-2019-0083894 | A | 15 July 2019 | CN | 110574190 | A | 13 December 2019 |
| | | | | CN | 110574190 | B | 13 May 2022 |
| | | | | EP | 3614459 | A1 | 26 February 2020 |
| | | | | JP | 2020-522097 | A | 27 July 2020 |
| | | | | KR | 10-2263460 | B1 | 11 June 2021 |
| | | | | US | 11189885 | B2 | 30 November 2021 |
| | | | | US | 2020-0152945 | A1 | 14 May 2020 |
| | | | | WO | 2019-135510 | A1 | 11 July 2019 |
| KR | 10-2019-0004158 | A | 11 January 2019 | KR | 10-2426253 | B1 | 28 July 2022 |
| | | | | US | 2020-0127264 | A1 | 23 April 2020 |
| | | | | WO | 2019-009564 | A1 | 10 January 2019 |

Form PCT/ISA/210 (patent family annex) (July 2022)

**REFERENCES CITED IN THE DESCRIPTION**

**Patent documents cited in the description**

• KR 1020220126886

**Non-patent literature cited in the description**

• *Journal of Materials Chemistry*, 2012, vol. 22, 341